# EUROPEAN PATENT SPECIFICATION

(11) **EP 4 415 581 B1**
(45) Date of publication and mention of the grant of the patent: **13.08.2025**
(21) Application number: 22797654.5
(22) Date of filing: 12.10.2022
(51) Int. Cl.: A47B 13/02, F16B 12/42, A47B 9/20

(54) **FRAME FOR A SIT-STAND-TABLE**
GESTELL FÜR EINEN SITZ-STEH-TISCH
CADRE POUR TABLE ASSIS-DEBOUT

(30) Priority: 15.10.2021 DK PA202100991
(43) Date of publication of application: 21.08.2024
(73) Proprietor: LINAK A/S, 6430 Nordborg (DK)
(72) Inventor: JØRGENSEN, Casper, 6470 Sydals (DK)
(74) Representative: Høyer, Michael
(86) International application number: PCT/DK2022/050213
(87) International publication number: WO 2023/061542

(56) References cited:
- CN-A- 110 477 600
- CN-A- 113 317 617
- CN-U- 213 464 183
- CN-U- 213 849 258

## Description

The present invention relates to a frame for sit-stand-tables comprising a lifting column and a foot. The invention further relates to a table having such a frame.

Lifting columns comprising a telescopic guide and a box-shaped housing for height-adjustable tables where the telescopic guide appears as a table leg were developed in the late 1990s. The box-shaped housing, which is usually rectangular, comprises an electric motor, transmission and various electronics. An example of such a lifting column is disclosed in Fig. 1 of WO 2004/100632 A1 to LINAK A/S. A different type of lifting column is described in WO 03/003876 A1 to LINAK A/S, where the entire drive unit, i.e. electric motor, transmission and various electronics are integrated in the telescopic guide.

A frame carrying a tabletop for a height-adjustable table, comprises an upper frame, which typically comprises two longitudinal members and two cross members, at least one lifting column and at least one foot. The lifting column can, as described above, be designed with or without a box-shaped housing at the upper end. The longitudinal members are usually constructed as through-going tube profiles, located in parallel with a mutual distance corresponding to the width of the box-shaped housing. At each end of the longitudinal members, a cross member is secured. The longitudinal members and the cross members are usually welded together or must be assembled with screws. A lifting column is mounted at each end by placing the box-shaped housing between the longitudinal members with an end against the respective cross member. The lifting column is secured by means of screws through the two longitudinal members and through the cross member into the box-shaped housing. The same goes for the assembly of the foot to the lifting column. Assembly of the frame is troublesome and time consuming. This is due to the parts of the frame being relatively large and heavy. Furthermore, the assembly of the frame requires several screw operations, which requires that the individual parts are placed correctly relative to each other.

WO2020/220150 A1 to Jiecang Linear Motion Technology Co. Ltd. discloses an adjustable table frame, where a connecting member is used to assemble a lifting column to a foot. The connecting member is a tubular element which is to be fastened to the bottom of the lifting column with a screw. Four L-shaped grooves extend at the side of the connecting member and are assessable at the free end of the connecting member. The upper side of the foot comprises an opening with a geometry corresponding to the connecting member and four nuts for engagement with the grooves. When inserted, the foot is turned 90 degrees and one of the nuts engage a locking lug preventing the foot from being turned back. This solution will, due to the turning of the foot, scratch the surface of the foot. Moreover, it requires high manufacturing tolerances as even small deviations will cause a loose and unreliable assembly between the foot and lifting column and thus an unstable and a potentially collapsible table frame.

Another solution for assembling a lifting column and a foot is provided in CN213154661U to Changzhou Kaidi Electrical Co Itd. Here the bottom plate of the lifting column has two locking tracks extending approximately a quarter of a circle. The locking tracks are inclined and ends in a locking boss. The foot comprises two locking pins for engagement with the locking tracks. Once the locking pin is inserted into the locking groove, the foot must be turned. Due to the inclination of the locking track, the foot will gradually be forced against the lifting column and locking pin will eventually reach the locking boss. This solution suffers the same drawbacks as the above. Apart from the scratching of the surface of the foot, even small manufacturing tolerances may result in an unreliable assembly of the foot and lifting column. This might be due to the assembly being too loose or too tight. The latter would cause problems for the person assembling as an increased torque will have to be applied to reach the position of the locking boss. There is also a risk that some of the parts would be deformed plastically, leading to instability or an excess stress in some of the parts. A further drawback arises when the lifting column and foot is disassembled. Here, the deformations of the parts could make it difficult or even impossible to reassemble.

CN 213 849 258 U discloses a further frame for a sit-stand table.

The purpose of the invention is to provide a frame for tables which does not suffer from the drawback mentioned above, and which can be assembled in an intuitive, simple, and easy manner.

This is achieved according to the invention as defined in claim 1. The person assembling the lifting column and the foot just need to insert the bolts and activation pins into their corresponding holes and the fastening mechanism will fix the two together. This self-tightening of the fastening mechanism can therefore take up and absorb the tolerance chain or accumulation of tolerances of the lifting column and the foot. Disassembling the lifting column and the foot will also not be a problem as the fastening mechanism will take up and absorb any changes in tolerances or slack.

In an embodiment of the invention, the clamping sleds is a plate member having a flat portion that engages the inner side of the upper part of the foot. Hereby, it is ensured that the position of the clamping sled inside the foot relative to the bolts is kept.

In an embodiment of the invention, the guides of the clamping sleds extend at an angle relative to the plane parallel to the flat portion of the spring biased spacer. This serves to pull the bolts and thereby move the lifting column and the foot into a forced and tight engagement.

In an embodiment of the invention, the open ends of the guides are closest to the upper part and from where the guides extend at an angle towards the lower part. When the fastening mechanism is released, the bolts will be pulled in a direction toward the lower part.

In an embodiment of the invention, the open end of the guides is coincident with the plane parallel to the flat portion of the spring biased spacer. Once the clamping sleds and the tension springs enter the retracted state, this position of the open end ensures a reliable engagement with the bolts.

In an embodiment, the bolts comprise a shank divided in three portions: a first portion and second portion having a diameter close to but not equal to the diameter of the holes in the upper part of the foot and the spring biased spacer, and a third portion between the first portion and second portion. The third portion having a diameter which is less than the diameter of the first portion and the second portion. Hereby, faces between the different portions are created and helps to better guide the clamping sleds into engagement with the bolt.

In an embodiment, the diameter of the third portion of the bolts is smaller than the width of the guides of the clamping sleds such that the third portion of the bolts can be accommodated in the guides, including engagement with the face between the second portion and the third portion of the bolts. This maximizes the area of the faces engaging the guides of the clamping sleds which again ensures the required transfer of forces.

In an embodiment, the profile of the lifting column to be assembled with the foot comprises a bottom plate at the lower end of the profile to which the bolts are fixed. The bolts extend in a direction parallel to the longitudinal axis of the profile. The bottom plate serves to transfer force applied by the fastening mechanism to and from the foot and the lifting column.

In an embodiment, the activation pins are arranged between the bolts such that they extend in a direction parallel to the longitudinal axis of the profile. An even, i.e. parallel, movement of the spring biased spacer can thereby be achieved.

In an embodiment, the open end of the guides of the clamping sleds face each other. This mirrored position results in applying an even force to pull the clamping sleds towards each other, keeping the forced engagement between the lifting column and the foot approximately equal.

The invention relates a further embodiment to a height-adjustable table comprising a frame according to one or more of the above-mentioned embodiments.

An embodiment of the invention will be described more fully below with reference to the accompanying drawing, in which:
Fig. 1 shows a perspective view of a height-adjustable table,
Fig. 2 illustrates a height-adjustable table in a sitting position,
Fig. 3 illustrates the height-adjustable table in a standing position,
Fig. 4 illustrates a profile of a lifting column attached to a foot of a height adjustable table,
Fig. 5 illustrates a profile 5 of a lifting column detached from a foot of a height adjustable table,
Fig. 6 illustrates a perspective of the lower end of a profile of a lifting column,
Figs. 7a and 7b illustrate the bolt fastened to the lower end of a profile of a lifting column in a perspective and side view,

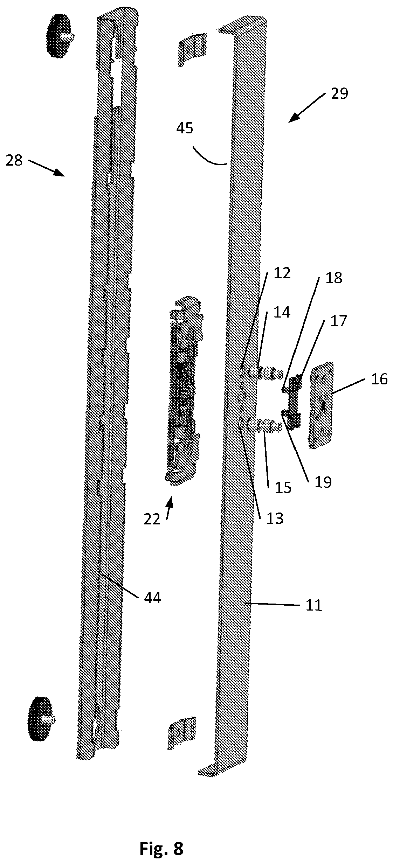

Figs. 8 and 9 illustrate the foot and parts of the lifting column in an exploded top view and bottom view,
Fig. 10 illustrates in perspective an exploded view of a fastening mechanism,
Fig. 11 illustrates in perspective the fastening mechanism in an extracted state,
Figs. 12a and 12b illustrate the foot with the fastening mechanism in an extended state in a cross section along the longitudinal axis of the foot,

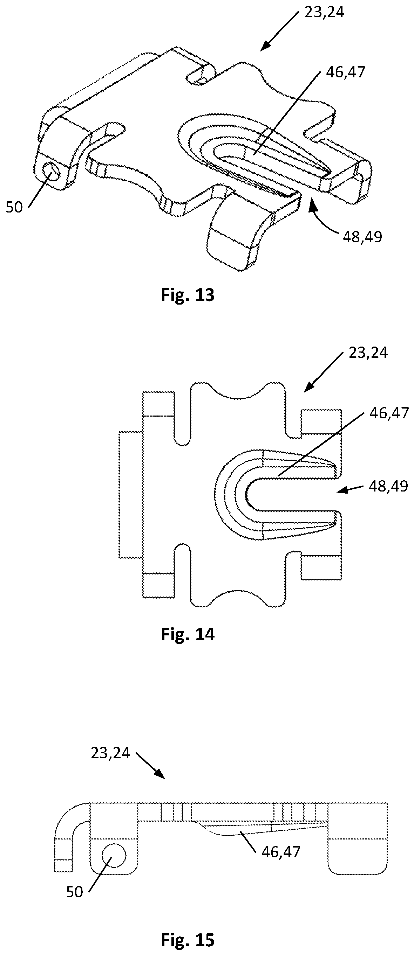

Figs. 13 to 15 illustrate a clamping sled in different views,

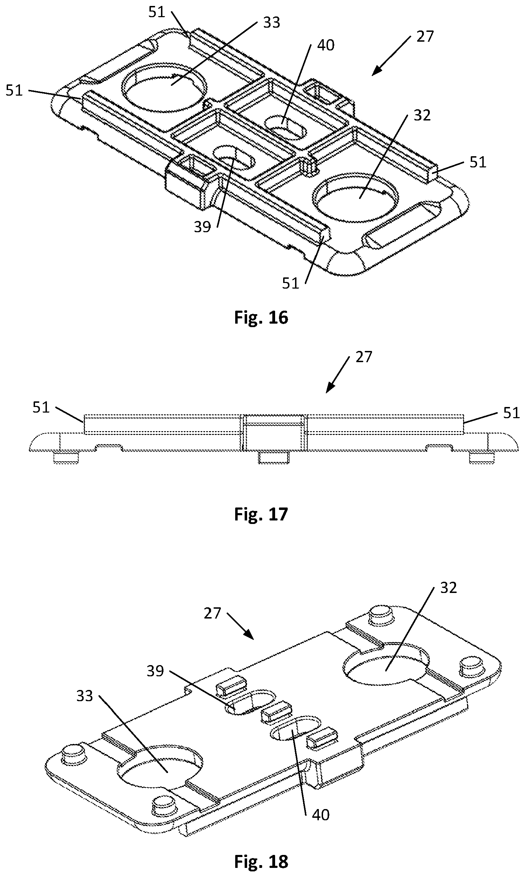

Figs. 16 to 18 illustrate a spring biased spacer in different views,
Fig. 19 illustrates in perspective the fastening mechanism, bolts and activation element a retracted state, and
Figs. 20a and 20b illustrate the foot with the fastening mechanism in a retracted state and the lower part of the lifting column, all in a cross section along the longitudinal axis of the foot.

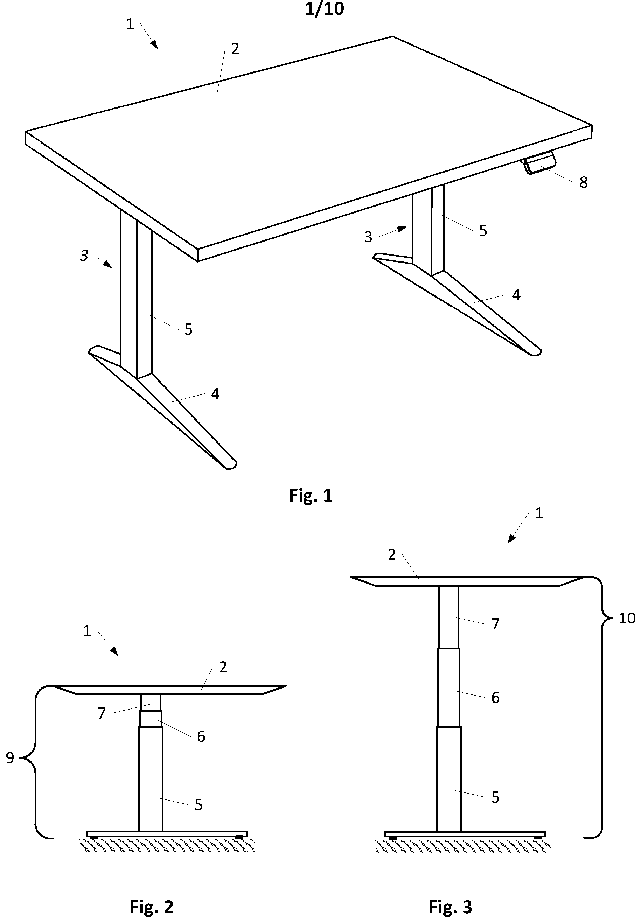

Fig. 1 shows a perspective view of a height-adjustable table 1 comprising a tabletop 2. At each side of the height-adjustable table 1, a linear actuator in the form of a lifting column 3 is mounted in a carrying frame (not shown) onto which the tabletop 2 is mounted. The other end of each lifting column 3 is fixed to a foot 4 on which the height-adjustable table 1 stands. The lifting columns 3 comprise a drive unit (not shown) and two or three mutually telescopically arranged profiles 5,6,7. One profile 5 is fixed to the foot 4 and one profile 7 is mounted to the carrying frame of the table 1. Depending on the type of lifting column 3, the profile 7 can be directly mounted to the frame of the table or via a motor housing at the top of the profile 7. Each lifting column 3 is driven by means of an electric motor, which drives a spindle through a gear. The spindle is furnished with a spindle nut secured to the telescopically movable profile(s) 5,6,7. The height-adjustment of the tabletop 2 is thus performed by the lifting columns 3. The adjustment is achieved by activating the operating panel 8. The number of telescopically arranged profiles in a lifting column can vary from at least two and up. Also, the length of the profiles and the stroke length of the lifting column can be configured as needed.

Figures 2 and 3 illustrate a side view of the height-adjustable table 1 in a sitting position 9 and a standing position 10, respectively. Since the length of the lifting columns 3 can be adjusted, the sitting position 7 and standing position 8 can be set to accommodate the physical characteristics and personal preferences of each individual user of the height-adjustable table 1.

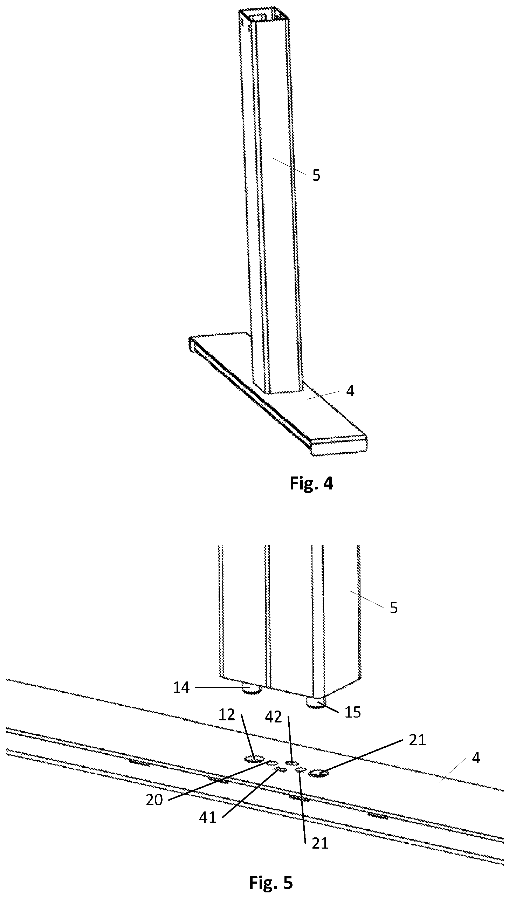

Figure 4 shows the profile 5 attached to the foot 4 and figure 5 shows the profile 5 detached from the foot 4. The upper side 11 of the foot 4 comprises two holes 12,13 through which the bolts 14,15 can be inserted for attachment of the profile 5 of the lifting column 3 to the foot 4.

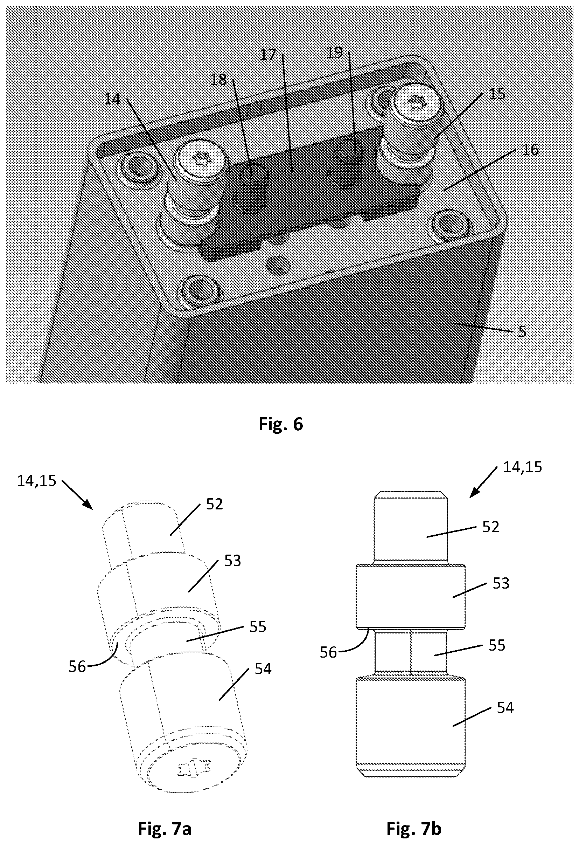

As shown in fig. 6, one end of the bolts 14,15 are fixed in the bottom plate 16 at the lower end of the profile 5 and extends in a direction parallel to the longitudinal axis of the profile 5. An activation element 17 having two pins 18,19 is arranged between the two bolts 14,15. The pins 18,19 extend in the same direction as the bolts 14,15 and can be inserted in the holes 20,21 when the profile 5 of the lifting column 3 is to be attached to the foot 4. When the pins 18, 19 and the bolts 14,15 are inserted into the holes 20,21 and the bolt holes 12,13 respectively, they engage different parts of a fastening mechanism 22, which will be explained in the following.

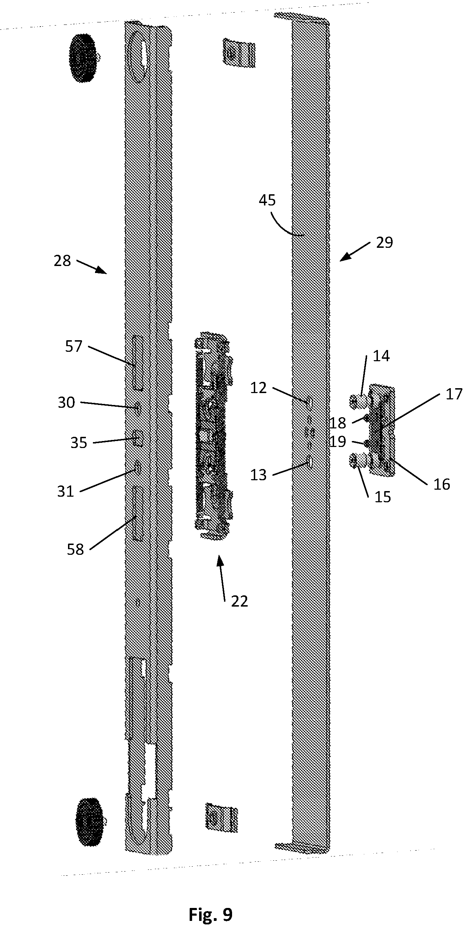

The fastening mechanism 22 comprises two clamping sleds 23, 24, two tension springs 25, 26, and a spring biased spacer 27. The fastening mechanism is arranged inside the foot 4 which comprises a lower part 28 and an upper part 29. In the embodiment of the foot 4 in figure 9, the lower part 28 has a U-shaped cross section relative to the longitudinal axis of the foot 4. The upper part 29 is an elongated plate member fixed to the lower part 28 such that it covers the opening of the U and thus forms an oblong cavity or channel with open ends. These ends are closed by bended end sections of the upper part 29, which extends towards the bottom of the U of the lower part 28. The fastening mechanism 22 is arranged such that it can extend and retract along the longitudinal axis of the foot 4. The lower part 28 has two holes 30,31 aligned with the holes 12,13 of the upper part 29.

In this embodiment, the spring biased spacer 27 is formed as an oblong plate member having two holes 32,33 which are aligned with the holes 12,13,30,31 of the upper part 29 and the lower part 28, respectively. To ensure that the spring biased spacer 27 is not unintentionally displaced along the longitudinal axis inside foot 4, a spacer fastener 34 is attached to the spring biased spacer 27 from the outside of the foot 4 through an opening 35 in the lower part 28.

The spacer fastener 34 has a squared part 36 and two snap legs 37,38 extending perpendicular to the plane of the squared part 36. With the legs 37,38, the spacer fastener 34 is inserted in the opening 35. The legs 37,38 are then led through the slots 39,40 in the spring biased spacer 27. Once through, snap locking means 37a,38a engage the spring biased spacer 27, fastening the two together. The legs 37,38 extend further into the slots 41,42 in the upper part 29 of the foot 4. The squared part 36 of the spacer fastener 34 can abut the sides of the opening 35 in the lower part 28, and the legs 37,38 can abut the sides of the slots 41,42 in upper part 29. This allows a displacement of the spring biased spacer 27 along an axis parallel or coaxial with the longitudinal axis of the profiles 5,6,7 of the lifting column 3 when attached to the foot 4, but, at the same time, a displacement of the spring biased spacer 27 along the longitudinal axis of foot 4 is prohibited.

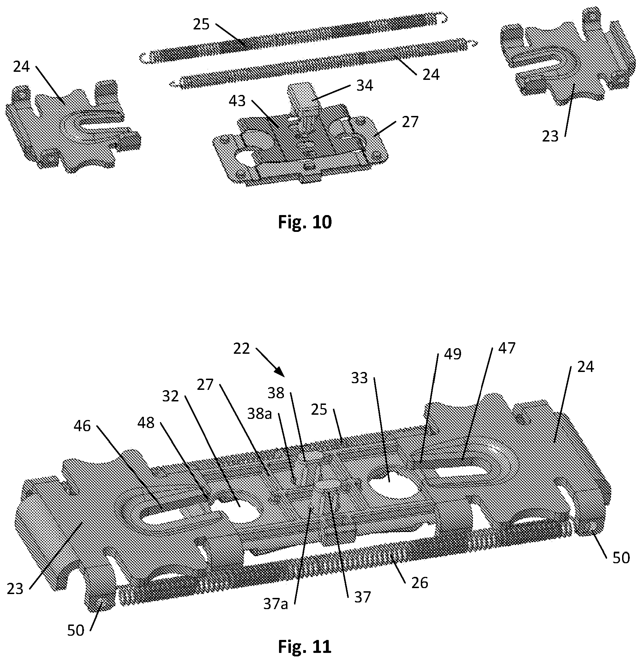

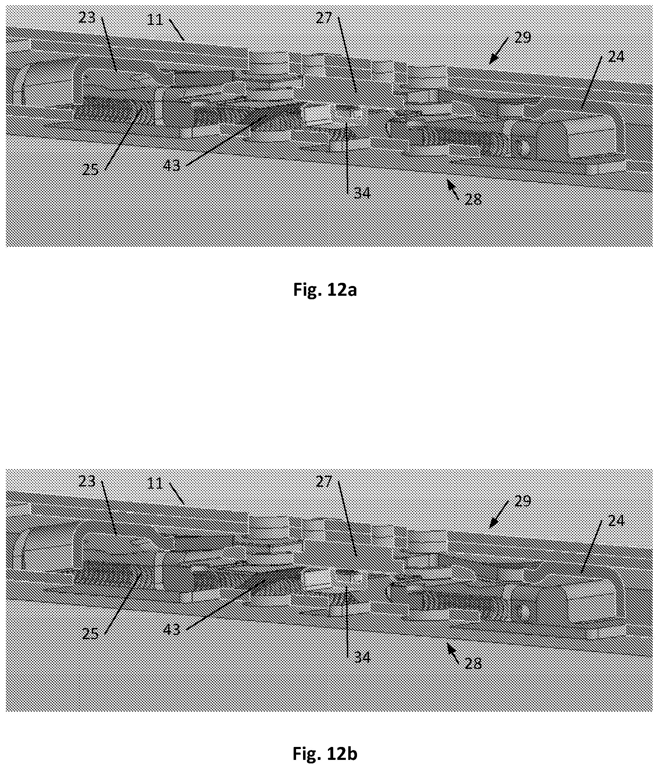

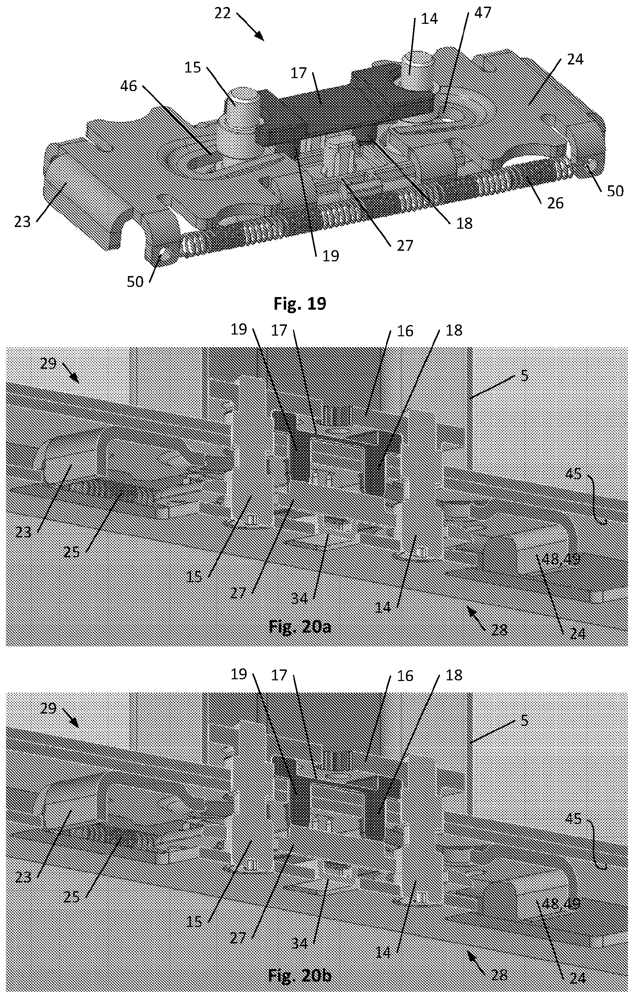

The fastening mechanism 22 can either be in an extended state or a retracted state. The extended state is a where the fastening mechanism 22 is ready for receiving the bolts 14,15 and pins 18,19 of the profile 5 of the lifting column 3. In the other words, this is the state prior to the assembly of the lifting column 3 with the foot 4. The retracted state is where the bolts 14,15 are clamped in the fastening mechanism 22, i.e. the state where lifting column 3 is assembled to the foot 4. The extended state of the fastening mechanism 22, which is illustrated in figures 11 and 12, and the retracted state, which is illustrated in figures 19 and 20, of the fastening mechanism 22 will now be explained.

In this present embodiment, the spring biased spacer 27 comprises a spring 43 which abuts the bottom inner side 44 of the lower part 28. The spring 43 has two legs which abut the inner side 44 of the lower part 28 at each side of the holes 30,31. The spring 43 is connected to the spring biased spacer 27 such that it also abuts an area between the two holes 32,33. The spring 43 is pre-tensioned and slightly compressed when arranged inside the foot 4, such that the accumulated potential energy presses the spring biased spacer 27 towards a forced engagement with the inner side 45 of the upper part 29. Further compression of the spring 43 will allow displacement of the spring biased spacer 27 in a direction parallel to the center axis of the holes 32, 33. The spring 43 could be made of for example spring steel or another material with similar characteristics. In an alternative embodiment, the spring 43 could be substituted by two coil springs encircling or surrounding the pathway created by the two holes 32,33 for the spring biased space 27 and the two holes 30,31 of the lower part 28.

The clamping sleds 23,24 are alike and are arranged in a mirrored manner at each end of the spring biased spacer 27 opposite the holes 32,33. In the present embodiment, the clamping sled 23,24 is a plate member having a flat portion which can engage the inner side 45 of the upper part 29 of the foot 4. The flat portion comprises several bent portions which extend approximately perpendicular relative to the plane of the flat portion. The free ends of the bent portions face and can engage the inner side 44 of the lower part 28 of the foot 4. Parts of the sides or edges of the flat portion of the clamping sleds 23,24 face and can engage the inner side 44 of the lower part 28, which in the present embodiment would be the inner side of the arms in the U-shaped cross section of the lower part 28. This embodiment of the clamping sleds 23,24 allow them to be displaced and guided inside the foot 4 along the longitudinal axis of the same.

The clamping sleds 23,24 each have a guide or tracks 46,47 with an open end 48,49 facing the holes 32,33. The guides 46,47 extends in a direction approximately parallel to the longitudinal axis of the foot 4. The width of the guides 46,47, i.e. the distance between the parallel sides of the guides 46,47, is smaller than the diameter of the holes 32,33 and adapted to engage a portion of the bolts 14,15. The guides 46,47 are wedge-shaped relative to the flat portion of the clamping sleds 23,24 or a plane parallel to the spring biased spacer 27. The open ends 48,49 of the guides or tracks 46,47 are closest to the upper part 29, such that the plane of the guides or tracks 46,47 extend in an angle towards the lower part 28 and ends a distance into the flat portion of the clamping sled 23,24. The clamping sleds 23,24 are connected to each other via two tension springs 25,26, which in parallel extends along and on each side of the spring biased spacer 27. In this embodiment, the connection points 50 for the tension springs 25,26 are at an end of the clamping sleds 23,24 opposite the open end 48,49 of the guides 46,47.

In the extended state, the clamping sleds 23,24 are, by applying a force to extend the tension springs 25,26, pulled away from each other and positioned such that they rest against a projecting edge 51 at the ends of the oblong plate member of the spring biased spacer 27. The potential energy accumulated in the tension springs 25,26 as they are extended will exert a pull force between the clamping sleds 23,24. This pull force is kept unreleased as along as the clamping sleds 23,24 rest against the projecting edge 51 of the spring biased spacer 27 which, as explained above, is in forced engagement with the inner side 43 of the upper part 29.

When the lifting column 3 is to be assembled with the foot 4, the bolts 14,15 and the pins 18,19 of the lifting column 3 are led into the respective holes 12,13 and 20,21, from the upper side 11 of the upper part 29 of the foot 4. As the holes 12,13 of the upper part 29, the holes 30,31 of the lower part 28, and the holes 32,33 of the spring biased spacer 27 are all aligned, the bolts 14,15 can be led into these until the lower end of profile 5 abuts and engages the upper side 11 of the foot. The pins 18,19 inserted into holes 20,21 will, once through, move towards and eventually engage the spring biased spacer 27. Moving the pins 18,19 further will displace the spring biased spacer 27 towards the bottom inner side 42 of the lower part 28 and thus away from its forced engagement with inner side 45 of the upper part 29. Hereby, the fastening mechanism will enter the retracted state, as this will cause a disengagement between the projecting edge 51 of the spring biased spacer 27 and the clamping sleds 23,24. The potential energy accumulated in the tension springs 25,26 will then be released and pull the clamping sleds 23,24 against each other, initiating engagement between the bolts 14,15 and the guides 46,47.

The bolts 14,15 have a threaded portion 52 fixed to a corresponding thread in the bottom plate 16 of the lower end profile 5 of the lifting column 3. The remaining part of the bolts 14,15 is a shank divided in three portions: a first portion 53 and a second portion 54, the first portion 53 being closest to the bottom plate 16. The first portion 53 and second portion 54 have a diameter smaller than the diameter of the holes 12,13;30,31;32,33. A third portion 55 extending between the first portion 53 and the second portion 54 has a reduced shank diameter relative to the first and second portions 53,54. The faces between the third portion 55 and the first and second portions 53,54 are approximately perpendicular to the longitudinal axis of the bolts 14,15. Moreover, the shank diameter of the third portion 55 is smaller than the width of the guides 46,47 and can be accommodated in the guides 46,47. This will allow the guides 46,47 to engage only the third portion 55 of the bolts 14,15 including the face 56 between the second portion 54 and the third portion 55. The released potential energy of the tension springs 25,26 will, as mentioned, pull the clamping sleds 23,24 towards each other moving the point engagement with the bolts 14,15 further into guides 46,47. Since the guides 46,47 are wedge-shaped or extend in an angle, the bolts 14,15 are pulled in a direction away from the upper part 29 of the foot 4, which brings the lower end of the profile 5 into a forced engagement with the upper side 11 of the upper part of the foot 4. This forced engagement is so tight that the lifting column 3 is immovably or almost immovably assembled to the foot 4. Even in the retracted state of the fastening mechanism 22, the tension springs 25,26 will never be fully contracted and thereby still hold a certain potential energy, which exerts a constant pull force between the clamping sleds 23,24. Over time, dynamic loads exerted on the assembled lifting column 3 and foot 4 would cause the clamping sleds 23,24 to move further towards each other and thereby further tightening the forced engagement between them.

If the lifting column 3 and the foot 4 are to be disassembled, the fastening mechanism 22 can be moved from the retracted state to the extracted state. This is done by accessing each of the clamping sleds 23,24 through openings 57,58 in the lower part 28 of the foot 4 and pull them away from each other either by hand or using a suitable tool. When the distance between the clamping sleds 23,24 exceeds the distance between the projecting edges 51 of the spring biased spacer 27 engaging each of the clamping sleds 23,24, the accumulated potential energy of the spring 43 will be released and push the the spring biased spacer 27 into the open space between the clamping sleds 23,24. Allowing the clamping sleds 23,24 to move towards each other, they will again engage the projecting edge 51 of the spring biased spacer 27, bringing the fastening mechanism 22 into its extracted state.

It is understood that elements or principles from the embodiment can be combined with consideration for the specific usage of the frame. The invention is here in particular mentioned in connection with sit-stand desks, but it is understood that the invention can also be used in connection with other types of tables such as work tables, counters, kitchen tables etc.

## Claims

1. A frame for a sit-stand-table comprising
a height-adjustable lifting column (3) with at least two telescopically arranged profiles (5,6,7), two bolts (14,15) and two activation pins (18,19),
a foot (4) comprising an upper part (29) having holes (12,13) for the bolts (14,15) and holes (20,21) for the activation pins (18,19),
a fastening mechanism (22) arranged inside the foot (4) accessible through the two holes (12,13) for the bolts (14,15) and the two holes (20,21) for the activation pins (18,19), and where the fastening mechanism (22) further comprises
a spring biased spacer (27) having
a spring (36),
two holes (32,33) aligned with the two holes (12,13) for the bolts (14,15),
two tensions springs (25,26), and
two clamping sleds (23,24) each having a guide (46,47) with an open end (48,49) and where the clamping sleds (23,24) are connected by the two tension springs (25,26),
and where the spring biased spacer (27) is configured to set in either
1) An inactive state where the spring biased spacer (27) is in forced engagement with an inner side (38) of the upper part (29) of the foot (4),
2) An active state where the two activation pins (18,19) are moved to displace the spring biased spacer (27) out of engagement with the inner side (38) of the upper part (29) of the foot (4),
and where the clamping sleds (23,24) and the tension springs (25,26) are configured to set in either
3) An extracted state where the clamping sleds (23,24) are in forced engagement with opposite sides of the spring biased spacer (27) when the spring biased spacer (27) is in the inactive state,
4) A retracted state where clamping sleds (23,24) are pulled towards each other by the two tensions springs (25,26) such that the guides (46,47) engage with bolts (14,15) when the spring biased spacer (27) is in the active state.

2. A frame for a sit-stand-table according to claim 1, where the clamping sleds (23,24) are a plate member having a flat portion that engages the inner side (45) of the upper part (29) of the foot (4).

3. A frame for a sit-stand-table according to claim 2, where the guides (46,47) extend at an angle relative to a plane parallel to the flat portion of the spring biased spacer (27).

4. A frame for a sit-stand-table according to claim 3, where the open ends (48,49) of the guides (46,47) are closest to the upper part (29) and from where the guides (46,47) extend at an angle towards the lower part (28).

5. A frame for a sit-stand-table according to claim 3, where the open end (48,49) of the guides (46,47) are coincident with the plane parallel to the flat portion of the spring biased spacer (27).

6. A frame for a sit-stand-table according to claim 1, where the bolts (14,15) comprises a shank divided in three portions, a first portion (53) and second portion (54) having a diameter smaller than the diameter of the holes (12,13) for bolts (14,15) and the holes (32,33) of the spring biased spacer (27), and a third portion (55) between the first portion (53) and second portion (54) having a diameter which is less than the diameter of the first portion (53) and the second portion (54).

7. A frame for a sit-stand-table according to claim 6, where the diameter of the third portion (55) is smaller than the width of the guides (46,47) of the clamping sleds (23,24).

8. A frame for a sit-stand-table according to one or more of the claims 1 to 7, where a profile (5) of the lifting column (3) comprises a bottom plate (16) at the lower end of the profile (5) to which the bolts (14,15) are fixed and where the bolts (14,15) extend in a direction parallel to the longitudinal axis of the profile (5).

9. A frame for a sit-stand-table according one or more of the claims 1 to 7, where the activation pins (18,19) are arranged between the bolts (14,15) such that they extend in a direction parallel to the longitudinal axis of the profile (5).

10. A frame for a sit-stand-table according to one or more of the claims 1 to 9, where the open ends (48,49) of the guides (46,47) of the clamping sleds (23,24) face each other.

11. Height-adjustable table comprising a frame according to one or more of the claims 1-10.

## Patentansprüche

1. Rahmen für einen Steh-Sitz-Tisch, umfassend:
eine höhenverstellbare Hubsäule (3) mit mindestens zwei teleskopartig angeordneten Profilen (5, 6, 7), zwei Bolzen (14, 15) und zwei Aktivierungsstiften (18, 19),
einen Fuß (4), umfassend einen oberen Teil (29), der Löcher (12, 13) für die Bolzen (14, 15) und Löcher (20, 21) für die Aktivierungsstifte (18, 19) aufweist,
einen im Inneren des Fußes (4) angeordneten Befestigungsmechanismus (22), der durch die zwei Löcher (12, 13) für die Bolzen (14, 15) und die zwei Löcher (20, 21) für die Aktivierungsstifte (18, 19) zugänglich ist, und wobei der Befestigungsmechanismus (22) ferner Folgendes umfasst:
einen federvorgespannten Abstandshalter (27), der Folgendes aufweist:
eine Feder (36),
zwei Löcher (32, 33), die an den zwei Löchern (12, 13) für die Bolzen (14, 15) ausgerichtet sind,
zwei Spannfedern (25, 26), und
zwei Klemmschlitten (23, 24), die jeweils eine Führung (46, 47) mit einem offenen Ende (48, 49) aufweisen, und wobei die Klemmschlitten (23, 24) mit den zwei Spannfedern (25, 26) verbunden sind,
und wobei der federvorgespannte Abstandshalter (27) dazu konfiguriert ist, eines aus Folgendem einzustellen:
1) einen inaktiven Zustand, wobei der federvorgespannte Abstandshalter (27) in kraftschlüssigem Eingriff mit einer Innenseite (38) des oberen Teils (29) des Fußes (4) ist,
2) einen aktiven Zustand, wobei die zwei Aktivierungsstifte (18, 19) dazu bewegt werden, den federvorgespannten Abstandshalter (27) aus dem Eingriff mit der Innenseite (38) des oberen Teils (29) des Fußes (4) zu verlagern,
und wobei die Klemmschlitten (23, 24) und die Spannfedern (25, 26) dazu konfiguriert sind, eines aus Folgendem einzustellen:
3) einen ausgefahrenen Zustand, wobei die Klemmschlitten (23, 24) in kraftschlüssigem Eingriff mit gegenüberliegenden Seiten des federvorgespannten Abstandshalters (27) sind, wenn der federvorgespannte Abstandshalter (27) in dem inaktiven Zustand ist,
4) einen eingefahrenen Zustand, wobei die Klemmschlitten (23, 24) durch die zwei Spannfedern (25, 26) so zueinander gezogen werden, dass die Führungen (46, 47) in Bolzen (14, 15) eingreifen, wenn der federvorgespannte Abstandshalter (27) in dem aktiven Zustand ist.

2. Rahmen für einen Steh-Sitz-Tisch nach Anspruch 1, wobei die Klemmschlitten (23, 24) ein Plattenelement sind, das einen flachen Abschnitt aufweist, der in die Innenseite (45) des oberen Teils (29) des Fußes (4) eingreift.

3. Rahmen für einen Steh-Sitz-Tisch nach Anspruch 2, wobei die Führungen (46, 47) sich in einem Winkel relativ zu einer Ebene parallel zu dem flachen Abschnitt des federvorgespannten Abstandshalters (27) erstrecken.

4. Rahmen für einen Steh-Sitz-Tisch nach Anspruch 3, wobei die offenen Enden (48, 49) der Führungen (46, 47) am nächsten zu dem oberen Teil (29) sind und von wo sich die Führungen (46, 47) in einem Winkel zu dem unteren Teil (28) erstrecken.

5. Rahmen für einen Steh-Sitz-Tisch nach Anspruch 3, wobei die offenen Enden (48, 49) der Führungen (46, 47) mit der Ebene parallel zu dem flachen Abschnitt des federvorgespannten Abstandshalters (27) zusammenfallen.

6. Rahmen für einen Steh-Sitz-Tisch nach Anspruch 1, wobei die Bolzen (14, 15) einen in drei Abschnitte geteilten Schaft umfassen, wobei ein erster Abschnitt (53) und ein zweiter Abschnitt (54) einen Durchmesser aufweisen, der kleiner ist als der Durchmesser der Löcher (12, 13) für die Bolzen (14, 15) und die Löcher (32, 33) des federvorgespannten Abstandshalters (27), und ein dritter Abschnitt (55) zwischen dem ersten Abschnitt (53) und dem zweiten Abschnitt (54) einen Durchmesser aufweist, der geringer ist als der Durchmesser des ersten Abschnitts (53) und des zweiten Abschnitts (54).

7. Rahmen für einen Steh-Sitz-Tisch nach Anspruch 6, wobei der Durchmesser des dritten Abschnitts (55) kleiner ist als die Breite der Führungen (46, 47) der Klemmschlitten (23, 24).

8. Rahmen für einen Steh-Sitz-Tisch nach einem oder mehreren der Ansprüche 1 bis 7, wobei ein Profil (5) der Hubsäule (3) eine Bodenplatte (16) an dem unteren Ende des Profils (5) umfasst, an der die Bolzen (14, 15) befestigt sind, und wobei sich die Bolzen (14, 15) in eine Richtung parallel zu der Längsachse des Profils (5) erstrecken.

9. Rahmen für einen Steh-Sitz-Tisch nach einem oder mehreren der Ansprüche 1 bis 7, wobei die Aktivierungsstifte (18, 19) zwischen den Bolzen (14, 15) so angeordnet sind, dass sie sich in eine Richtung parallel zu der Längsachse des Profils (5) erstrecken.

10. Rahmen für einen Steh-Sitz-Tisch nach einem oder mehreren der Ansprüche 1 bis 9, wobei die offenen Enden (48, 49) der Führungen (46, 47) der Klemmschlitten (23, 24) einander zugewandt sind.

11. Höhenverstellbarer Tisch, umfassend einen Rahmen nach einem oder mehreren der Ansprüche 1 bis 10.

## Revendications

1. Cadre pour une table à hauteur ajustable comprenant
une colonne de levage réglable en hauteur (3) avec au moins deux profilés (5, 6, 7) agencés de manière télescopique, deux boulons (14, 15) et deux tiges d'activation (18, 19),
un pied (4) comprenant une partie supérieure (29) présentant des trous (12, 13) pour les boulons (14, 15) et des trous (20, 21) pour les tiges d'activation (18, 19),
un mécanisme de fixation (22) agencé à l'intérieur du pied (4) accessible à travers les deux trous (12, 13) pour les boulons (14, 15) et les deux trous (20, 21) pour les tiges d'activation (18, 19), et où le mécanisme de fixation (22) comprend en outre une entretoise à ressort (27) présentant
un ressort (36),
deux trous (32, 33) alignés avec les deux trous (12, 13) pour les boulons (14, 15),
deux ressorts de tension (25, 26), et
deux glissières de serrage (23, 24) présentant chacune un guide (46, 47) avec une extrémité ouverte (48, 49) et où les glissières de serrage (23, 24) sont reliées par les deux ressorts de tension (25, 26),
et où l'entretoise à ressort (27) est configurée pour se mettre soit dans
1) un état inactif où l'entretoise à ressort (27) est en prise forcée avec un côté interne (38) de la partie supérieure (29) du pied (4),
2) un état actif où les deux tiges d'activation (18, 19) sont déplacées pour déplacer l'entretoise à ressort (27) hors prise avec le côté interne (38) de la partie supérieure (29) du pied (4),
et où les glissières de serrage (23, 24) et les ressorts de tension (25, 26) sont configurés pour être mis soit dans
3) un état extrait où les glissières de serrage (23, 24) sont en prise forcée avec des côtés opposés de l'entretoise à ressort (27) lorsque l'entretoise à ressort (27) est dans l'état inactif,
4) un état rentré où les glissières de serrage (23, 24) sont tirées l'une vers l'autre par les deux ressorts de tension (25, 26) de telle sorte que les guides (46, 47) viennent en prise avec les boulons (14, 15) lorsque l'entretoise à ressort (27) est dans l'état actif.

2. Cadre pour une table à hauteur ajustable selon la revendication 1, où les glissières de serrage (23, 24) sont un élément formant plaque présentant une portion plane qui vient en prise avec le côté interne (45) de la partie supérieure (29) du pied (4).

3. Cadre pour une table à hauteur ajustable selon la revendication 2, où les guides (46, 47) s'étendent en formant un angle par rapport à un plan parallèle à la portion plane de l'entretoise à ressort (27).

4. Cadre pour une table à hauteur ajustable selon la revendication 3, où les extrémités ouvertes (48, 49) des guides (46, 47) sont les plus proches de la partie supérieure (29) et à partir d'où les guides (46, 47) s'étendent en formant un angle vers la partie inférieure (28).

5. Cadre pour une table à hauteur ajustable selon la revendication 3, où les extrémités ouvertes (48, 49) des guides (46, 47) coïncident avec le plan parallèle à la portion plane de l'entretoise à ressort (27).

6. Cadre pour une table à hauteur ajustable selon la revendication 1, où les boulons (14, 15) comprennent un corps divisé en trois portions, une première portion (53) et une deuxième portion (54) ayant un diamètre inférieur au diamètre des trous (12, 13) pour les boulons (14, 15) et des trous (32, 33) de l'entretoise à ressort (27), et une troisième portion (55) entre la première portion (53) et la deuxième portion (54) ayant un diamètre qui est inférieur au diamètre de la première portion (53) et de la deuxième portion (54).

7. Cadre pour une table à hauteur ajustable selon la revendication 6, où le diamètre de la troisième portion (55) est inférieur à la largeur des guides (46, 47) des glissières de serrage (23, 24).

8. Cadre pour une table à hauteur ajustable selon une ou plusieurs des revendications 1 à 7, où un profilé (5) de la colonne de levage (3) comprend une plaque inférieure (16) à l'extrémité inférieure du profilé (5) à laquelle les boulons (14, 15) sont fixés et où les boulons (14, 15) s'étendent dans une direction parallèle à l'axe longitudinal du profilé (5).

9. Cadre pour une table à hauteur ajustable selon une ou plusieurs des revendications 1 à 7, où les tiges d'activation (18, 19) sont agencées entre les boulons (14, 15) de sorte qu'elles s'étendent dans une direction parallèle à l'axe longitudinal du profilé (5).

10. Cadre pour une table à hauteur ajustable selon une ou plusieurs des revendications 1 à 9, où les extrémités ouvertes (48, 49) des guides (46, 47) des glissières de serrage (23, 24) sont face à face.

11. Table réglable en hauteur comprenant un cadre selon une ou plusieurs des revendications 1 à 10.
